# EUROPÄISCHE PATENTSCHRIFT

(11) **EP 0 378 069 B1**
(45) Veröffentlichungstag und Bekanntmachung des Hinweises auf die Patenterteilung: **21.07.1993**
(21) Anmeldenummer: 90100006.7
(22) Anmeldetag: 02.01.1990
(51) Int. Cl.: A22C 13/00

(54) **Schlauchförmige Nahrungsmittelhülle aus Cellulosehydrat, insbesondere künstliche Wursthülle**
Tubular food casings of cellulose hydrate, especially synthetic sausage casings
Enveloppes tubulaires en hydrate de cellulose pour aliments, en particulier enveloppes synthétiques pour saucisses

(30) Priorität: 07.01.1989 DE 3900343
(43) Veröffentlichungstag der Anmeldung: 18.07.1990
(73) Patentinhaber: HOECHST AKTIENGESELLSCHAFT, 65926 Frankfurt am Main (DE)
(72) Erfinder: Hammer, Klaus-Dieter, Dr., D-6500 Mainz 1 (DE); Winter, Hermann, D-6200 Wiesbaden (DE)

(56) Entgegenhaltungen:
- EP-A- 0 141 066
- EP-A- 0 190 630
- EP-A- 0 247 437
- DE-A- 3 240 847
- GB-A- 920 903

## Beschreibung

Die Erfindung bezieht sich auf eine schlauchförmige Nahrungsmittelhülle, insbesondere künstliche Wursthülle, aus Cellulosehydrat mit einer äußeren Überzugsschicht, die ein fungizides Mittel enthält.

Bei Nahrungsmittelhüllen aus Cellulosehydrat besteht das Problem, daß sie während der Lagerung vor dem Befüllen mit dem Nahrungsmittel von unerwünschten Schimmelpilzen und anderen Mikroorganismen befallen und damit unbrauchbar werden. Das Wachstum der Schimmelpilze wird besonders beschleunigt, wenn die Nahrungsmittelhüllen vor ihrer Verarbeitung mit einem erhöhten Feuchtigkeitsgehalt aufbewahrt werden, der zum Füllen benötigt wird, um eine ausreichende Flexibilität der Hülle zu gewährleisten.

Zur Verhinderung dieses nachteiligen Effektes ist es bekannt, auf der äußeren Oberfläche von Celluloseschläuchen als fungizides Mittel Glycerinmonolaurat aufzubringen (EP-A-0 141 066, US-A-4,662,403). Diese Verbindung hat gegenüber wasserlöslichen fungiziden Verbindungen den Vorteil, daß sie auf der äußeren Oberfläche auch nach der Verarbeitung der Hülle, insbesondere auch nach der Heißwasserbehandlung der mit Wurstmasse gefüllten Wursthülle, noch in ausreichender Menge vorhanden ist. Mit diesem fungiziden Mittel sollen auch die in einer Zweitverpackung, z.B. in einem Kunststoffbeutel, eingeschlossenen Würste mit einer Wursthaut aus Cellulose vor dem unerwünschten Befall der Celluloseschicht mit Schimmelpilzen geschützt werden.
In einer Weiterentwicklung dieser bekannten Beschichtung enthält die Überzugsschicht neben Glycerinmonolaurat noch zusätzlich Kaliumsorbat, welches mit vernetztem Eiweiß (Casein/Glyoxal) an die Oberfläche der Wursthülle aus faserverstärkter Cellulose gebunden ist (DE-A-36 06 195, US-A-4,666,750). Diese Beschichtung soll außerdem noch den Abbau der Cellulose durch cellulytische Enzyme verhindern. In einer anderen vorbeschriebenen Ausführungsform ist das Kaliumsorbat dagegen mit Epichlorhydrin-Polyamin-Polyamid-Harz auf der Schlauchoberfläche verankert und befindet sich vorzugsweise auf der Schlauchinnenseite, während Glycerinmonolaurat auf der Schlauchaußenseite vorhanden ist (EP-A-0 247 437). Nach dieser Lehre sollen vorbefeuchtete Wursthüllen aus faserverstärkter Cellulose, die ohne weitere Wässerung verarbeitbar sind, vor dem Befall mit Schimmelpilzen geschützt werden.

Diese bekannten Präparationen zeigen zwar nach dem Brühen oder Kochen der mit pastösen Nahrungsmitteln gefüllten Schlauchhüllen noch ausreichende Wirkung. Es wurde jedoch festgestellt, daß bei langanhaltender und intensiver Einwirkung von Schimmelpilzsporen auch diese Mittel keinen ausreichend sicheren Schutz vor Befall der Cellulosehülle mit Schimmelpilzen bieten. Werden beispielsweise Dauerwürste mehrere Wochen neben solchen Salamitypen an der Luft getrocknet, die auf ihrer Außenseite mit Edelschimmelpilzen besiedelt sind, so werden die Dauerwursthüllen durch die ständige Einwirkung der von den Salamitypen abgehenden Schimmelpilzsporen selbst dann im Laufe der Zeit vom Schimmelpilz befallen, wenn sie mit einer der obengenannten fungiziden Außenbeschichtungen versehen sind. Auch in Kunststoffbeutel verpackte Würste sind bei ungünstigen Lagerbedingungen (hohe Temperatur und Feuchtigkeit) besonders stark dem Befall von Schimmelpilzsporen ausgesetzt, so daß die Wirkung der bekannten fungiziden Mittel unter Umständen nicht ausreicht.

Nach einem nicht vorveröffentlichten Vorschlag (P 38 07 070.7) werden heterocyclische Verbindungen, insbesondere Benzimidazol- und Isothiazolon-Verbindungen, z.B. N-Alkylisothiazolon, auf der äußeren Wursthüllenoberfläche als fungicides Mittel eingesetzt.

Es ist deshalb Aufgabe der Erfindung, ein fungizides Mittel bzw. eine fungizide Beschichtung oder Imprägnierung anzugeben, welche selbst in den genannten extremen Fällen einen Befall der Cellulosehülle mit Schimmelpilzen sicher verhindert. Die äußere Beschichtung bildet eine Überzugsschicht, die nicht notwendigerweise geschlossen und ununterbrochen ist. Es ist auch eine Imprägnierung der Cellulose ausreichend, wobei die fungiziden Mittel mehr oder weniger in das Hüllenmaterial eingedrungen sind.

Diese Aufgabe wird bei schlauchförmigen Nahrungsmittelhüllen aus Cellulosehydrat, die insbesondere als künstliche Wursthülle Verwendung finden, überraschenderweise dadurch gelöst, daß sie einen fungiziden Gehalt an Di-n-decyldimethylammonium-Verbindung aufweist. Diese Verbindung befindet sich bei Verwendung der Hülle als künstliche Wursthülle zweckmäßigerweise in einer äußeren Beschichtung oder Außenimprägnierung der Hülle.

Das Anion ist beispielsweise Bromid, Phosphat oder Propionat, gewöhnlich jedoch Chlorid.

Der fungicide Effekt läßt sich noch steigern, wenn das Anion Sorbat CH₃-CH=CH-CH=CH-COO⁻ ist. In diesem Fall wird das Didecyldimethylammoniumchlorid vorzugsweise in Mischung mit einer stöchiometrischen Menge von einem Salz der Sorbinsäure, insbesondere von Kaliumsorbat eingesetzt. Die Didecyldimethylammonium-Verbindung wird der Einfachheit halber als die fungicide Verbindung bezeichnet.

Eine Erhöhung der fungiciden Wirkung läßt sich auch erzielen, wenn die Didecyldimethylammonium-Verbindung gemeinsam mit weningtens einer anderen fungiciden Substanz eingesetzt wird, die sich beim Brühen der fertiggestellten Wurst mit heißem Wasser von der Außenoberfläche der Wursthülle praktisch nicht ablösen läßt. Hierzu gehören ein Salz der Sorbinsäure, Glycerinmonolaurat (EP-A-0 141 066, Seite 4), welches in der alpha-Form als Racemat und/oder in der beta-Form vorliegt, und die in der älteren deutschen Patentanmeldung P 38 07 070.7 genannten fungiciden heterocyclischen Verbindungen. Von diesen sind die dort beschriebenen N-Alkyl-Isothiazolon-Verbindungen besonders geeignet. Zu diesen Verbindungen gehören die dort mit den Formeln a, d, e, f und h bezeichneten Isothiazolon-Verbindungen. Der N-Alkylrest ist vorzugsweise ein geradkettiger, unverzweigter Kohlenwasserstoffrest, insbesondere mit 5 bis 14 C-Atomen.

Für eine optimale fungizide Wirksamkeit der Didecyldimethylammonium-Verbindung sollte sie in einer Mindestmenge von etwa 10, insbesondere etwa 20 mg/m² vorhanden sein. Gewöhnlich werden 20 bis 80 mg/m² dieser fungiziden Verbindung eingesetzt. Es ist auch möglich, reduzierte Mengen von unter 20 oder sogar unter 15 mg/m² dieser fungiziden Verbindung einzusetzen, sofern deren Wirkung durch Zusatz von anderen fungiziden Verbindungen verstärkt wird. Für Wursthüllen, die vor oder nach dem Füllen mit Wasser behandelt werden, ist eine höhere Auftragsmenge erforderlich. Im allgemeinen wird dann eine Mindestmenge von 60, insbesondere 80 mg/m² erforderlich, wobei die fungicide Wirkung durch zusätzliche fungicide Mittel gegebenenfalls verstärkt wird. Für die obere Grenze der Auftragsmenge sind lebensmittelrechtliche Vorschriften zu beachten. Im allgemeinen wird die Auftragsmenge 300, insbesondere 200 mg/m² nicht überschreiten. Die angegebenen Auftragsmengen beziehen sich auf Didecyldimethylammoniumchlorid.

Das Gewichtsverhältnis der Auftragsmenge an fungizider Verbindung zur Auftragsmenge an Salz der Sorbinsäure bzw. Glycerinmonolaurat bzw. fungicider heterocyclischer Verbindung beträgt zweckmäßigerweise 3 : 1 bis 1 : 3, vorzugsweise 2 : 1 bis 1 : 2.

Das eigentliche Hüllenmaterial besteht aus Cellulose, nämlich Cellulosehydrat, das auch als regenerierte Cellulose oder Zellglas bezeichnet wird. Die Celluloseschicht enthält vorzugsweise in ihrer Wandung eine Faserverstärkung, z.B. aus Hanffaserpapier, die auf einer oder beiden Oberflächen mit Cellulose bedeckt ist. Diese als Faserdarm bezeichneten Wursthüllen werden besonders für großkalibrige Würste eingesetzt.

Die Nahrungsmittelhülle wird auf übliche Weise beispielsweise nach dem Viskoseverfahren hergestellt. Hierbei wird Viskose durch eine Ringdüse extrudiert oder eine zu einem Schlauch geformte Faserbahn, z.B. aus Papier oder Hanffasern, durch eine Ringdüse auf der Innen- und/oder Außenseite mit alkalischer Viskoselösung beschichtet und die Viskose mit einer sauren Fällflüssigkeit behandelt, welche die Koagulation der Viskose bewirkt. Die Viskoselösung enthält gegebenenfalls die zur Ausbildung einer weißen oder farbigen Hülle erforderlichen Farbstoffpigmente. Zur Herstellung verstärkungsfreier Cellulosehüllen wird die extrudierte Viskose direkt in das Fällbad ausgepreßt.

Der erhaltene gegebenenfalls faserverstärkte Schlauch aus Cellulosehydrat-Gel wird vor dem Trocknen auf seiner Außenseite mit der erfindungswesentlichen Beschichtung versehen, wobei die fungicide Verbindung in wäßriger und/oder alkoholischer Lösung vorliegt. Geeignete Alkohole sind aliphatische Verbindungen mit 1 bis 4 C-Atomen. Der Auftrag erfolgt auf übliche Weise, z.B. durch Tränken in einem Flüssigkeitsbad, Walzenauftrag oder Besprühen. Die Konzentration der fungiziden Verbindung in der wäßrigen und/oder alkoholischen Beschichtungsflüssigkeit beträgt insgesamt 0,02 bis 10 Gew.-%. Für Hüllen, die mit erhöhtem Feuchtigkeitsgehalt vor ihrer Verarbeitung gelagert, aber keiner Heißwasserbehandlung unterworfen werden, ist eine niedrigere Auftragsmenge ausreichend, um die Hüllen vor und nach ihrer Verarbeitung schimmelfrei zu halten, so daß die Konzentration der fungiciden Verbindung in der Beschichtungsflüssigkeit in diesem Fall gewöhnlich nur 0,05 bis 2 Gew.-% beträgt. Soll die Hülle dagegen vor dem Füllen gewässert und/oder nach dem Füllen einer Heißwasserbehandlung unterzogen werden, ist eine höhere Auftragsmenge erforderlich. Die Beschichtungsflüssigkeit weist dann eine erhöhte Konzentration an fungicider Verbindung im Bereich von 2 bis 10, insbesondere 4 bis 8 Gew.-% auf.

Wird zur Verstärkung der fungiziden Wirkung zusätzlich noch ein Salz der Sorbinsäure wie z.B. Kaliumsorbat, die fungicide heterocyclische Verbindung und/oder Glycerinmonolaurat eingesetzt, so wird der Anteil in der Beschichtungsflüssigkeit entsprechend der gewünschten Zusammensetzung der Überzugsschicht eingestellt.

Wird die Beschichtungsflüssigkeit in einem Bad aufgebracht, so enthält sie zweckmäßigerweise noch einen oder mehrere Weichmacher für die Cellulose, insbesondere ein- oder mehrwertige Alkohole, wie z.B. Glycerin, Propandiol (Propylenglykol) oder Äthanol oder deren Mischungen in üblicher Menge.
Gegebenenfalls weist die Hülle zusätzlich eine wasserdampfundurchlässige Schicht auf der Innenseite auf.

Die Erfindung wird durch die nachfolgenden Beispiele näher erläutert.

### Beispiel 1

Ein auf seiner Außenseite mit alkalischer Viskoselösung (Cellulosexanthogenat) versehener Faserschlauch (Durchmesser 65 mm) wird mit saurer Koagulations- und Fällflüssigkeit behandelt. Der erhaltene faserverstärkte Schlauch aus Cellulosehydrat-Gel wird vor dem Trocknereingang zur Außenbeschichtung durch eine Tränkwanne gefahren, die eine wäßrige Lösung der folgenden Zusammensetzung enthält:
10 g/l Di-n-decyldimethylammoniumchlorid
100 ml/l Glycerin

In das Innere des Schlauches wird eine 1 bis 2 gew.- %ige wäßrige Lösung eines üblichen hitzehärtbaren kationischen Harzes eingefüllt, das zur Verbesserung der Haftung zwischen Hülle und Wurstmasse dient. Der Schlauch wird nach oben geführt, so daß überschüssige Überzugslösung auf der Außen- und Innenseite des Schlauches nach unten ablaufen kann.

Der Schlauch wird danach wie üblich im aufgeblasenen Zustand getrocknet und auf einen Wassergehalt von 16 bis 18 Gew.-% befeuchtet.
Die Auftragsmenge des fungiziden Mittels auf der äußeren Oberfläche beträgt etwa 30 mg/m². Der Anteil des fungiziden Mittels wird UV-spektroskopisch anhand einer vorher erstellten Eichkurve ermittelt.

Der Schlauch wird auf einer üblichen Raffvorrichtung gerafft und hierbei auf einen Feuchtigkeitsgehalt von etwa 25 Gew.-% befeuchtet. Die erhaltenen Raupen werden in luftdichten feuchtigkeitsundurchlässigen Folienbeuteln mehrere Monate bei etwa 25-30°C gelagert. Sie zeigen keinen Schimmelbefall.

### Beispiel 2

Ein auf seiner Außenseite und Innenseite im Gewichtsverhältnis 3 : 7 mit alkalischer Viskoselösung versehener Faserschlauch (Durchmesser 60 mm) wird nach der Koagulation der Viskose und Regenerierung zu Cellulosehydrat-Gel auf seiner Außenseite mit Propan-1,2-diol als Lösungsmittel beschichtet. Je Liter Lösung sind 50 g Di-n-decyldimethylammoniumchlorid als fungizides Mittel vorhanden.

Das Propandiol dient gleichzeitig als Weichmacher für die Cellulose. Auf der Innenseite des Schlauches wird analog Beispiel 1 eine 0,3 bis 0,7 gew.-%ige wäßrige Lösung eines hitzehärtbaren kationischen Harzes aufgebracht. Bei der anschließenden Trocknung des Schlauches im aufgeblasenen Zustand wird das kationische Harz gehärtet. Anschließend wird der Schlauch auf einen Feuchtigkeitsgehalt von 8-10 Gew.-% befeuchtet. Die Auftragsmenge des fungiziden Mittels auf der äußeren Schlauchoberfläche beträgt etwa 120 mg/m².

Der Schlauch wird in einzelne Schlauchabschnitte unterteilt und diese einseitig abgebunden. Die Schlauchabschnitte werden vor dem Füllen mit Wurstbrät vom Salamityp 20 Minuten in etwa 40°C warmen Wasser gewässert. Das offene Wursthüllenende wird nach dem Füllen verschlossen.

Man lagert die erhaltenen Würste zur Reifung unmittelbar neben Würsten mit Edelschimmelbewuchs drei Monate lang. Danach ist trotz der unmittelbaren Nachbarschaft der Würste zu den mit Edelschimmel versehenen Würsten kein Schimmelbefall auf der äußeren Oberfläche der Wursthülle feststellbar. Die fungicide Beschichtung an der Wursthüllenoberfläche wurde bei der Wässerung offensichtlich nur unwesentlich abgelöst, so daß ihre fungicide Wirkung erhalten blieb.

Dieses Ergebnis wird auch durch den folgenden Labortest bestätigt:

1 Beutel (ca. 10 g) im Handel erhältlicher Reinzucht-Schimmelpilzsporen von "Penicillium nalgiovense" wird in 200 ml Wasser aufgeschlämmt. Von dieser Suspension wird 1 ml auf die äußere Oberfläche eines längsaxial aufgeschnittenen Wursthüllenabschnitts (ca. 50 cm²) gleichmäßig verteilt. Nach 3-monatiger Einwirkungsdauer bei 25°C/95-99 % rel. Feuchte ist die Probe noch frei von Schimmelpilzen.

Die fungicide Verbindung der Erfindung verhindert auch indirekt den Abbau der Cellulose durch cellulytische Enzyme (Cellulase), da sie das Wachstum von Schimmelpilzen verhindert, welche für die Bildung von cellulytischen Enzymen verantwortlich sind.

### Beispiel 3

Ein nach Beispiel 2 hergestellter faserverstärkter Schlauch (Viskoseverteilung 3/7 außen/innen) aus Cellulosehydrat-Gel wird in analoger Weise auf seiner Außenseite mit einer wäßrigen Beschichtungsflüssigkeit der folgenden Zusammensetzung versehen:
25 g/l Kaliumsorbat
60 g/l Di-n-decyldimethylammoniumchlorid
100 ml/l Glycerin

Die Schlauchinnenseite wird analog Beispiel 2 mit einer wäßrigen Lösung eines hitzehärtbaren kationischen Harzes versehen, welches beim anschließenden Trockenprozeß in seine wasserunlösliche Form übergeht und eine haft vermittelnde Imprägnierung für die danach hergestellte Sperrschicht aus Vinylidenchlorid-Mischpolymerisat bildet. Dieses Mischpolymerisat wird in wäßriger Dispersion nach dem Trocknen des Schlauches in das Schlauchinnere gebracht. Bei einer weiteren Trockenstufe wird das Dispersionsmittel entfernt und eine zusammenhängende, wasserdampf- und gasundurchlässige Sperrschicht aus VDC-Mischpolymerisat ausgebildet.

Die Auftragsmenge der äußeren Überzugsschicht aus fungizidem Mittel beträgt 150 mg/m², bezogen auf Didecyldimethylammoniumchlorid.

Einseitig abgebundene Wursthüllenabschnitte werden gewässert und mit Wurstmasse vom Brühwursttyp (Fleischwurst) befüllt, danach wird das offene Hüllenende mit einem Metallclip verschlossen. Die erhaltene Wurst wird in üblicher Weise mit heißem Wasser gebrüht und abgekühlt. Zum Nachweis der fungiziden Wirkung der äußeren Oberflächenschicht wird die Wurst mit der Schimmelpilzsporen enthaltenden Suspension des Beispiels 2 versehen, in einem Polyäthylen-Beutel luftdicht verpackt und bei etwa 8°C gelagert.

Nach 6-wöchiger Lagerzeit im Kühlraum wird die Zweitverpackung entfernt. Selbst bei diesen extremen Lagerbedingungen ist kein Schimmelpilzbefall auf der Außenseite der Wursthülle feststellbar. Auch ein Abbau der Cellulose ist nicht aufgetreten.

### Beispiel 4

Ein nach Beispiel 3 hergestellter faserverstärkter Schlauch aus Cellulosehydrat-Gel wird in analoger Weise auf seiner Außenseite mit einer wäßrigen Beschichtungsflüssigkeit mit den folgenden fungiciden Verbindungen versehen:
60 g/l N-n-octylisothiazolon
60 g/l Di-n-decyldimethylammoniumchlorid

Die Schlauchinnenseite wird analog Beispiel 3 mit einer Beschichtung aus dem hitzegehärteten kationischen Harz als Verankerungsschicht und einer Sperrschicht aus PVDC versehen. Die Auftragsmenge an Didecyldimethylammoniumchlorid in der äußeren Überzugsschicht beträgt 150 mg/m². Die fungizide Wirkung der Außenbeschichtung wird an Würsten wie in Beispiel 3 getestet (Brühwurst, verpackt im Kunststoffbeutel). Nach 8-wöchiger Lagerzeit im Kühlraum zeigen die Würste noch keinen Schimmelbefall. Ein Celluloseabbau ist praktisch nicht feststellbar.

Durch die nach der Erfindung vorgesehene Verwendung der fungiziden Verbindung in der äußeren Überzugsschicht wird die Nahrungsmittelhülle auf Basis von Cellulose oder faserverstärkter Cellulose vor Befall mit Schimmelpilzen geschützt. Die Verbindungen seigen in Kombination mit Salzen der Sorbinsäure, fungiciden heterocyclischen Verbindungen und/oder Glycerinmonolaurat eine besonders starke Wirkung, sogar wenn die Hülle vor dem Füllen gewässert und/oder nach dem Füllen mit heißem Wasser gebrüht wird. Insbesondere bei langanhaltender Einwirkung von großen Mengen an Schimmelpilzsporen auf die fertiggestellte Wurst erweist sich die fungizide Verbindung der Erfindung wirksamer als die bekannten Mittel, die bisher für Nahrungsmittelhüllen aus Cellulose beschrieben wurden. Die fungizide Beschichtung bzw. Imprägnierung zeigt eine erhöhte Langzeitwirkung bei extremen Lagerbedingungen der Wurst. Dauerwursttypen lassen sich neben mit Edelschimmelpilzen versehenen Würsten über Monate schimmelfrei halten. Auch das bei Zweitverpackung von Brühwürsten in Folienbeuteln gefürchtete Problem der Schimmelbildung während der Lagerung ist mit dem fungiziden Mittel der Erfindung gelöst.

## Patentansprüche

1. Schlauchförmige Nahrungsmittelhülle auf Basis von Cellulose, die ein fungizides Mittel enthält, dadurch gekennzeichnet, daß die Hülle einen fungiciden Gehalt an Di-n-decyldimethylammonium-Verbindung aufweist.

2. Hülle nach Anspruch 1, dadurch gekennzeichnet, daß sie als künstliche Wursthülle das fungicide Mittel auf der äußeren Oberfläche und gegebenenfalls eine wasserdampfundurchlässige Schicht auf der Innenseite aufweist.

3. Hülle nach Anspruch 1 oder 2, dadurch gekennzeichnet, daß sie einen Mindestgehalt von 10, insbesondere 20 mg des fungiciden Mittels je m² Hüllenoberfläche aufweist.

4. Hülle nach einem der Ansprüche 1 bis 3, dadurch gekennzeichnet, daß sie eine äußere Überzugsschicht aus einer Mischung von Di-n-decyldimethylammonium-Verbindung und wenigstens einem weiteren fungiciden Mittel, vorzugsweise einem Salz der Sorbinsäure, einer Isothiazolon-Verbindung und/oder Glycerinmonolaurat enthält.

5. Hülle nach Anspruch 4, dadurch gekennzeichnet, daß die Isothiazolonverbindung eine N-Alkylgruppe aus einem aliphatischen geradkettigen Kohlenwasserstoffrest, insbesondere mit 5 bis 14 C-Atomen, aufweist.

6. Hülle nach Anspruch 4 oder 5, dadurch gekennzeichnet, daß in der Überzugsschicht Di-n-decyldimethylammonium-Verbindung zusammen mit einem Salz der Sorbinsäure, Isothiazolon-Verbindung oder Glycerinmonolaurat vorhanden ist, wobei der Gewichtsanteil der erstgenannten Verbindung zum Gewichtsanteil einer der zweitgenannten Verbindungen sich wie 3 : 1 bis 1 : 3, insbesondere 2 : 1 bis 1 : 2, verhält.

7. Verwendung von Di-n-decyldimethylammonium-Verbindung als fungicides Mittel, insbesondere in äußerer Beschichtung oder Imprägnierung, bei Wursthüllen auf Basis von Cellulose.

## Claims

1. Tubular foodstuff casing based on cellulose, in which a fungicidal agent is contained, characterized in that said casing has a fungicidal content of a di-n-decyldimethylammonium compound.

2. Casing as claimed in claim 1, characterized in that it is a synthetic sausage casing provided with the fungicidal agent on its outer surface and, optionally, with a water steam-impermeable coating on its inner surface.

3. Casing as claimed in claim 1 or 2, characterized in that the content of fungicidal agent is at least 10 mg, in particular at least 20 mg, per m² of casing surface.

4. Casing as claimed in any of claims 1 to 3, characterized in that it is coated with an outer covering layer comprising a mixture of di-n-decyl-dimethylammonium compound and at least one further fungicidal agent, preferably a salt of sorbic acid, an isothiazolone compound and/or glycerol monolaurate.

5. Casing as claimed in claim 4, characterized in that the isothiazolone compound possesses an N-alkyl group comprising an aliphatic straight-chain hydrocarbon radical having in particular 5 to 14 carbon atoms.

6. Casing as claimed in claim 4 or 5, characterized in that di-n-decyl-dimethylammonium compound is present in said covering layer together with a salt of sorbic acid, an isothiazolone compound or glycerol monolaurate, with the weight ratio of the first-mentioned compound to the weight ratio of any one of the last-mentioned compounds being 3:1 to 1:3, in particular 2:1 to 1:2.

7. Use of di-n-decyl-dimethylammonium compound as a fungicidal agent, in particular in outer coatings or impregnations for sausage casings based on cellulose.

## Revendications

1. Enveloppe tubulaire à base de cellulose pour aliments, comprenant un agent fongicide, caractérisée en ce que ladite enveloppe présente une teneur à effet fongicide d'un composé de di-n-décyldiméthylammonium.

2. Enveloppe selon la revendication 1, caractérisée en ce que, en tant que boyau de saucisse artificiel, elle est pourvue de l'agent fongicide, sur sa surface externe et, éventuellement, d'une couche imperméable à la vapeur d'eau sur sa surface interne.

3. Enveloppe selon la revendication 1 ou 2, caractérisée en ce qu'elle comporte une teneur minimale de 10, en particulier de 20 mg de l'agent fongicide par m² de surface d'enveloppe.

4. Enveloppe selon une quelconque des revendications 1 à 3, caractérisée en ce qu'elle comporte une couche de revêtement externe à base d'un mélange d'un composé de di-n-décyldiméthylammonium et d'au moins un autre agent fongicide, de préférence un sel d'acide sorbique, un composé d'isothiazolone et/ou du monolaurate de glycérol.

5. Enveloppe selon la revendication 4, caractérisée en ce que le composé d'isothiazolone comporte un groupe N-alkyle provenant d'un reste hydrocarboné à chaîne linéaire aliphatique, en particulier en C₅₋₁₄.

6. Enveloppe selon la revendication 4 ou 5, caractérisée en ce que, dans la couche de revêtement, un composé de di-n-décyldiméthylammonium est présent conjointement avec un sel d'acide sorbique, un composé d'isothiazolone ou du monolaurate de glycérol, le rapport de la proportion pondérale du premier composé nommé à la proportion pondérale d'un des composés nommés en second étant compris entre 3:1 et 1:3, en particulier entre 2:1 et 1:2.

7. Utilisation d'un composé de di-n-décyldiméthylammonium, comme agent fongicide, en particulier pour le revêtement ou l'imprégnation externes de boyaux de saucisses à base de cellulose.
